# EUROPÄISCHE PATENTSCHRIFT

(11) **EP 2 236 315 B1**
(45) Veröffentlichungstag und Bekanntmachung des Hinweises auf die Patenterteilung: **21.12.2011**
(21) Anmeldenummer: 10157139.6
(22) Anmeldetag: 22.03.2010
(51) Int. Cl.: B60C 1/00, C08K 5/375, C08L 7/00, C08L 9/00, C08L 21/00

(54) **Kautschukmischung**
Rubber compound
Mélange de caoutchouc

(30) Priorität: 03.04.2009 DE 102009003735
(43) Veröffentlichungstag der Anmeldung: 06.10.2010
(73) Patentinhaber: Continental Reifen Deutschland GmbH, 30165 Hannover (DE)
(72) Erfinder: Weinreich, Hajo, Dr., 31552, Apelern (DE); De Risi, Francesca Romana, Dr., 30161, Hannover (DE); Meissner, Steffi, 31552, Rodenberg (DE); Rose, Christoph, Dr., 30659, Hannover (DE)
(74) Vertreter: Widjaja, Wira

(56) Entgegenhaltungen:
- EP-A1- 1 216 851
- EP-A1- 1 808 456
- EP-A2- 1 323 549
- WO-A1-2009/135004
- US-A- 5 861 465

## Beschreibung

Die Erfindung betrifft eine schwefelvernetzbare Kautschukmischung enthaltend zumindest einen Dienkautschuk, zumindest ein Klebharz und weitere Zuschlagstoffe. Die Erfindung betrifft ferner einen Reifen, der zumindest zum Teil aus einer mit Schwefel vulkanisierten Kautschukmischung besteht.

Bei der Herstellung von Reifen und anderen komplizierten Gummiartikeln ist es notwendig, dass die einzelnen Bauteile im unvulkanisierten Zustand eine gute Konfektionsklebrigkeit aufweisen, damit die Bauteile bis zur Vulkanisation in der gewünschten Position verbleiben.

Um die Konfektionsklebrigkeit zu erhöhen, ist es seit langem bekannt, der Kautschukmischung so genannte Klebharze zuzusetzen. Sie erhöhen die Klebrigkeit, beeinflussen aber auch bestimmte Vulkanisateigenschaften, wie Härte, Modul- und Quellverhalten. Typische in der Kautschukindustrie eingesetzte Klebharze sind z. B. Cumaron-Inden-Harze, Petroleumharze, Terpen-Phenol-Harze, Kolophoniumharze, Phenolharze und Phenol-Formaldehyd-Harze.

Bei der Mischungsherstellung ist eine besonders hohe Klebrigkeit, insbesondere Oberflächenklebrigkeit, in der Regel nicht erwünscht, da die Mischungen dann an Walzen und Mischaggregaten anhaften können und mühsam entfernt werden müssen. Wünschenswert sind daher Mischungssysteme die eine hohe Konfektionsklebrigkeit bei geringer Walzenklebrigkeit aufweisen. Ferner sollten bei hoher Konfektionsklebrigkeit die Vulkanisateigenschaften nach Möglichkeit nicht negativ beeinflusst werden.

Der Erfindung liegt daher die Aufgabe zugrunde, eine Kautschukmischung bereitzustellen, die sich durch eine hohe Konfektionsklebrigkeit bei gleichzeitig möglichst geringer Walzenklebrigkeit auszeichnet.

Gelöst wird die Aufgabe erfindungsgemäß dadurch, dass die Kautschukmischung
- zumindest einen Dienkautschuk,
- 0,5 - 10 phr zumindest eines Klebharzes, ausgewählt aus der Gruppe bestehend aus Phenolharz, Phenol-Formaldehyd-Harz, Cumaron-Inden-Harz und Kolophoniumharz, und
- 0,05 - 2 phr zumindest eines Aryl- und/oder Phenyldisulfids enthält.

Die in dieser Schrift verwendete Angabe phr (parts per hundred parts of rubber by weight) ist dabei die in der Kautschukindustrie übliche Mengenangabe für Mischungsrezepturen. Die Dosierung der Gewichtsteile der einzelnen Substanzen wird dabei stets auf 100 Gewichtsteile der gesamten Masse aller in der Mischung vorhandenen Kautschuke bezogen.

Überraschenderweise konnte festgestellt werden, dass durch die spezielle Kombination von 0,5 - 10 phr eines speziellen Klebharzes mit 0,05 - 2 phr eines Aryl- und/oder Phenyldisulfids die Walzenklebrigkeit bei hoher Konfektionsklebrigkeit reduziert werden kann.
Darüber hinaus zeigen die Mischungen als Vulkanisate besonders hohe Bruchdehnungen und Zugfestigkeiten. Dies lässt darauf schließen, dass die Aryl- und/oder Phenyldisulfide die Löslichkeit bzw. Dispersion der Klebharze in der Mischung verbessern.

Gemäß einer vorteilhaften Weiterbildung der Erfindung enthält die Kautschukmischung 1 bis 5 phr des speziellen Klebharzes. Mit diesen Mengen werden die besten Ergebnisse hinsichtlich eines ausgewogenen Verhältnisses zwischen Konfektionsklebrigkeit und Walzenklebrigkeit erzielt.

Als Klebharze können Phenolharze, Phenol-Formaldehyd-Harze, Cumaron-Inden-Harze und/oder Kolophoniumharze eingesetzt werden, die einen oxidativen Effekt zeigen können. Besonders hohe Zugfestigkeiten und Reißdehnungen werden allerdings erzielt, wenn als Harz ein Phenolharz und/oder ein Phenol-Formaldehyd-Harz eingesetzt wird. Dabei kann es sich beispielsweise um Koresin^{®} der Firma BASF (Phenolharz, Kondensationsprodukt aus Butylphenol und Acetylen) oder Durez 29095 der Firma Durex Corporation (Phenol-Formaldehyd-Harz) handeln.

Gemäß einer vorteilhaften Weiterbildung der Erfindung wird das Aryl- und/oder Phenyldisulfid in Mengen von nur 0,1 bis 1 phr der Mischung zugesetzt. Bereits derart geringe Mengen bewirken eine bessere Verteilung des Klebharzes in der Polymermatrix und damit eine bessere Konfektionsklebrigkeit.

Als Aryl- bzw. Phenyldisulfid wird vorzugsweise Diphenyldisulfid eingesetzt, welches kommerziell erhältlich und gut handhabbar ist.

Die schwefelvernetzbare Kautschukmischung enthält zumindest einen Dienkautschuk. Zu den Dienkautschuken zählen alle Kautschuke mit einer ungesättigten Kohlenstoffkette, die sich zumindest teilweise von konjugierten Dienen ableiten. Besonders bevorzugt ist, wenn der Dienkautschuk oder die Dienkautschuke ausgewählt ist bzw. sind aus der Gruppe, bestehend aus Naturkautschuk (NR), synthetischem Polyisopren (IR), Polybutadien (BR) und Styrol-Butadien-Copolymer (SBR). Diese Dienelastomere lassen sich gut zu der erfindungsgemäßen Kautschukmischung verarbeiten und ergeben in den vulkanisierten Reifen gute Reifeneigenschaften.

Die Kautschukmischung kann als Dienkautschuk Polyisopren (IR, NR) enthalten. Dabei kann es sich sowohl um cis-1,4-Polyisopren als auch um 3,4-Polyisopren handeln. Bevorzugt ist allerdings die Verwendung von cis-1,4-Polyisoprenen mit einem cis-1,4-Anteil > 90 Gew.-%. Zum einen kann solch ein Polyisopren durch stereospezifische Polymerisation in Lösung mit Ziegler-Natta-Katalysatoren oder unter Verwendung von fein verteilten Lithiumalkylen erhalten werden. Zum anderen handelt es sich bei Naturkautschuk (NR) um ein solches cis-1,4 Polyisopren, der cis-1,4-Anteil im Naturkautschuk ist größer 99 Gew.-%.

Enthält die Kautschukmischung als Dienkautschuk Polybutadien (BR), kann es sich dabei sowohl um cis-1,4- als auch um Vinyl-Polybutadien (10-90 Gew.-% Vinyl-Anteil) handeln. Bevorzugt ist die Verwendung von cis-1,4-Polybutadien mit einem cis-1,4-Anteil größer 90 Gew.-%, welches z. B. durch Lösungspolymerisation in Anwesenheit von Katalysatoren vom Typ der seltenen Erden hergestellt werden kann.

Bei dem Styrol-Butadien-Copolymer kann es sich um lösungspolymerisiertes Styrol-Butadien-Copolymer (S-SBR) mit einem Styrolgehalt, bezogen auf das Polymer, von ca. 10 bis 45 Gew.-% und einem Vinylgehalt (Gehalt an 1,2-gebundenem Butadien, bezogen auf das gesamte Polymer) von 10 bis 70 Gew.-% handeln, welches zum Beispiel unter Verwendung von Lithiumalkylen in organischem Lösungsmittel hergestellt werden kann. Die S-SBR können auch gekoppelt und endgruppenmodifiziert sein. Es können aber auch emulsionspolymerisiertes Styrol-Butadien-Copolymer (E-SBR) sowie Mischungen aus E-SBR und S-SBR eingesetzt werden. Der Styrolgehalt des E-SBR beträgt ca. 15 bis 50 Gew.-% und es können die aus dem Stand der Technik bekannten Typen, die durch Copolymerisation von Styrol und 1,3-Butadien in wässriger Emulsion erhalten wurden, verwendet werden.

Werden in der Kautschukmischung zumindest zwei Dienkautschuke, vorzugsweise Naturkautschuk, Polybutadien und Styrol-Butadien-Copolymer, im Verschnitt eingesetzt, hat sich gezeigt, dass die erfindungsgemäße Kombination von speziellem Klebharz mit zumindest einem Aryl- und/oder Phenyldisulfid eine verbesserte Kompatibilisierung der Polymere bewirkt, was sich in verbesserten Vulkanisateigenschaften widerspiegelt.

Zusätzlich zu den genannten Dienkautschuken kann die Mischung aber auch noch andere Kautschuktypen, wie z. B. Styrol-Isopren-Butadien-Terpolymer, Butylkautschuk, Halobutylkautschuk, Ethylen-Propylen-Dien-Kautschuk (EPDM) oder modifizierte Dienkautschuke enthalten. Die modifizierten Dienkautschuke können auf lösungs- oder emulsionpolymerisiertem Styrol-Butadienkautschuk basieren. Bei der Modifizierung kann es sich um solche mit Hydroxylgruppen und/oder Epoxygruppen und/oder Siloxangruppen und/oder Aminogruppen und/oder Aminosiloxan und/oder Carboxylgruppen und/oder Phthalocyaningruppen handeln.

Die Kautschukmischung kann als Füllstoff Ruß und/oder Kieselsäure in üblichen Mengen enthalten.
Die verwendeten Ruße weisen bevorzugt folgende Charakteristika auf: DBP-Zahl (gemäß ASTM D 2414) 90 bis 200 mL/100 g, CTAB-Zahl (gemäß ASTM D 3765) 80 bis 170 m²/g und Iodadsorptionszahl (gemäß ASTM D 1510) 10 bis 250 g/kg. Bei den Kieselsäuren kann es sich um die dem Fachmann bekannten Kieselsäuren, die als Füllstoff für Reifenkautschukmischungen geeignet sind, handeln. Besonders bevorzugt ist es allerdings, wenn eine fein verteilte, gefällte Kieselsäure verwendet wird, die eine Stickstoff-Oberfläche (BET-Oberfläche) (gemäß DIN 66131 und 66132) von 35 bis 350 m²/g, vorzugsweise von 145 bis 270 m²/g und eine CTAB-Oberfläche (gemäß ASTM D 3765) von 30 bis 350 m²/g, vorzugsweise von 120 bis 285 m²/g, aufweist. Derartige Kieselsäuren führen z. B. in Kautschukmischungen für Reifenlaufstreifen zu besonders guten physikalischen Eigenschaften der Vulkanisate. Außerdem können sich Vorteile in der Mischungsverarbeitung durch eine Verringerung der Mischzeit bei gleichbleibenden Produkteigenschaften ergeben, die zu einer verbesserten Produktivität führen. Als Kieselsäuren können somit z. B. sowohl jene des Typs VN3 (Handelsname) der Firma Degussa als auch hoch dispergierte Kieselsäuren, so genannte HD-Kieselsäuren (z. B. Ultrasil 7000 der Firma Degussa), zum Einsatz kommen.

Zur Verbesserung der Verarbeitbarkeit und zur Anbindung der Kieselsäure und anderer ggf. vorhandener polarer Füllstoffe an den Dienkautschuk können Silan-Kupplungsagenzien in Kautschukmischungen eingesetzt werden. Die Silan-Kupplungsagenzien reagieren mit den oberflächlichen Silanolgruppen der Kieselsäure oder anderen polaren Gruppen während des Mischens des Kautschuks bzw. der Kautschukmischung (in situ) oder bereits vor der Zugabe des Füllstoffes zum Kautschuk im Sinne einer Vorbehandlung (Vormodifizierung). Als Silan-Kupplungsagenzien können dabei alle dem Fachmann für die Verwendung in Kautschukmischungen bekannten Silan-Kupplungsagenzien verwendet werden. Solche aus dem Stand der Technik bekannten Kupplungsagenzien sind bifunktionelle Organosilane, die am Siliciumatom mindestens eine Alkoxy-, Cycloalkoxy- oder Phenoxygruppe als Abgangsgruppe besitzen und die als andere Funktionalität eine Gruppe aufweisen, die gegebenenfalls nach Spaltung eine chemische Reaktion mit den Doppelbindungen des Polymers eingehen kann. Bei der letztgenannten Gruppe kann es sich z. B. um die folgenden chemischen Gruppen handeln: - SCN, -SH, -NH₂ oder -Sₓ- (mit x = 2-8). So können als Silan-Kupplungsagenzien z. B. 3-Mercaptopropyltriethoxysilan, 3-Thiocyanato-propyltrimethoxysilan oder 3,3'-Bis(triethoxysilylpropyl)polysulfide mit 2 bis 8 Schwefelatomen, wie z. B. 3,3'-Bis(triethoxysilylpropyl)tetrasulfid (TESPT), das entsprechende Disulfid oder auch Gemische aus den Sulfiden mit 1 bis 8 Schwefelatomen mit unterschiedlichen Gehalten an den verschiedenen Sulfiden, verwendet werden. TESPT kann dabei beispielsweise auch als Gemisch mit Industrieruß (Handelsname XSOS der Firma Degussa) zugesetzt werden. Auch geblockte Mercaptosilane, wie sie z. B. aus der WO 99/09036 bekannt sind, können als Silan-Kupplungsagens eingesetzt werden.

Die Silan-Kupplungsagenzien werden in Mengen von 0,2 bis 30 Gewichtsteilen, vorzugsweise 1 bis 15 Gewichtsteilen, bezogen auf 100 Gewichtsteile Füllstoff, insbesondere Kieselsäure, eingesetzt, da dann eine optimale Anbindung des Füllstoffes an den oder die Kautschuke erfolgen kann.

Die Kautschukmischung kann außerdem noch andere Füllstoffe, wie beispielsweise Alumosilicate, Kreide, Stärke, Magnesiumoxid, Titandioxid oder Kautschukgele enthalten.

Die Kautschukmischung kann außer den genannten Substanzen noch andere Zusatzstoffe, wie z. B. Weichmacher (z. B. aromatische, naphthenische oder paraffinische Mineralölweichmacher, MES (mild extraction solvate) oder TDAE (treated distillate aromatic extract) oder flüssige Polymere, wie z. B. flüssiges Polybutadien) aufweisen.

Des Weiteren kann die erfindungsgemäße Kautschukmischung übliche Zusatzstoffe in üblichen Gewichtsteilen enthalten. Zu diesen Zusatzstoffen zählen Alterungsschutzmittel, wie z. B. N-Phenyl-N'-(1,3-dimethylbutyl)-p-phenylendiamin (6PPD), N-Isopropyl-N'-phenyl-p-phenylendiamin (IPPD), 2,2,4-Trimethyl-1,2-dihydrochinolin (TMQ) und andere Substanzen, wie sie beispielsweise aus J. Schnetger, Lexikon der Kautschuktechnik, 2. Auflage, Hüthig Buch Verlag, Heidelberg, 1991, S. 42-48 bekannt sind, Aktivatoren, wie z. B. Fettsäuren (z. B. Stearinsäure), Wachse, Harze und Mastikationshilfsmittel, wie z. B. 2,2'-Dibenzamidodiphenyldisulfid (DBD).

Die Vulkanisation wird in Anwesenheit von Schwefel oder Schwefelspendern durchgeführt, wobei einige Schwefelspender zugleich als Vulkanisationsbeschleuniger wirken können. Schwefel oder Schwefelspender werden im letzten Mischungsschritt in den vom Fachmann gebräuchlichen Mengen (0,4 bis 4 phr, Schwefel bevorzugt in Mengen von 1,5 bis 2,5 phr) der Kautschukmischung zugesetzt.

Des Weiteren kann die Kautschukmischung vulkanisationsbeeinflussende Substanzen Vulkanisationsbeschleuniger, Vulkanisationsverzögerer und Vulkanisationsaktivatoren in üblichen Mengen enthalten, um die erforderliche Zeit und/oder die erforderliche Temperatur der Vulkanisation zu kontrollieren und die Vulkanisateigenschaften zu verbessern. Die Vulkanisationsbeschleuniger können dabei zum Beispiel ausgewählt sein aus folgenden Beschleunigergruppen: Thiazolbeschleuniger wie z. B. 2-Mercaptobenzothiazol, Sulfenamidbeschleuniger wie z. B. Benzothiazyl-2-cyclohexylsulfenamid (CBS), Guanidinbeschleuniger wie z. B. N,N'-Diphenylguanidin (DPG), Dithiocarbamatbeschleuniger wie z. B. Zinkdibenzyldithiocarbamat, Disulfide. Die Beschleuniger können auch in Kombination miteinander eingesetzt werden, wobei sich synergistische Effekte ergeben können.

Die Herstellung der erfindungsgemäßen Kautschukmischung erfolgt auf herkömmliche Art und Weise, wobei zunächst in der Regel eine Grundmischung, die sämtliche Bestandteile mit Ausnahme des Vulkanisationssystems (Schwefel und vulkanisationsbeeinflussende Stoffe) enthält, in ein oder mehreren Mischstufen hergestellt wird und im Anschluss durch Zugabe des Vulkanisationssystems die Fertigmischung erzeugt wird. Anschließend wird die Mischung weiterverarbeitet, z. B. durch einen Extrusionsvorgang, und in die entsprechende Form gebracht.

Die Mischung kann für unterschiedliche Reifenbauteile eingesetzt werden. Beispielsweise kann die Mischung für Laufstreifen von Reifen eingesetzt werden. Dazu wird die Mischung in die Form eines Laufstreifens gebracht. Ein so erzeugter Laufstreifenmischungsrohling wird bei der Herstellung des Reifenrohlings, insbesondere Fahrzeugluftreifenrohlings, wie bekannt, aufgelegt. Der Laufstreifen kann aber auch auf einen Reifenrohling, der bereits alle Reifenteile bis auf den Laufstreifen enthält, in Form eines schmalen Kautschukmischungsstreifens aufgewickelt werden. Die Mischung kann aber auch für sonstige Reifenbauteile, wie Seitenwände, Gummierungsmischungen, Innenseelen, Kernreiter usw., verwendet werden.

Die erfindungsgemäße Kautschukmischung kann auch für andere Gummiartikel wie Riemen, Gurte, Förderbänder oder Schläuche eingesetzt werden.

Die Erfindung soll nun anhand von Vergleichs- und Ausführungsbeispielen, die in der Tabelle 1 zusammengefasst sind, näher erläutert werden.

Die Vergleichsmischungen sind mit V, die erfindungsgemäße Mischung ist mit E gekennzeichnet. In den Mischungen der Tabelle 1 wurden unterschiedliche Klebharze und ggf. Diphenyldisulfid zudosiert.

Die Mischungsherstellung erfolgte unter üblichen Bedingungen in zwei Stufen in einem Labortangentialmischer. Die Konfektionsklebrigkeit bestimmt, wobei die Klebrigkeit subjektiv über eine Skala von 0 (nicht klebrig) bis 5 (extrem klebrig) bewertet wurde. Ferner wurde als Maß für die Walzenklebrigkeit der Rollweg einer polierten Stahlkugel mit einem Durchmesser von 16 mm auf einer Platte unvulkanisierter, kalandrierter Mischung (1000 mm x 300 mm) unter folgenden Bedingungen ermittelt: Abrollrampe mit 30° Gefälle, Starthöhe 20 mm, Raumtemperatur.
Aus sämtlichen Mischungen wurden Prüfkörper durch optimale Vulkanisation unter Druck bei 160 °C hergestellt und mit diesen Prüfkörpern die Reißdehnung und die Zugfestigkeit bei Raumtemperatur gemäß DIN 53 504 ermittelt.

**Tabelle 1**

| **Bestandteile** | **Einheit** | **1(V)** | **2(V)** | **3(V)** | **4(V)** | **5(V)** | **6(V)** | **7(E)** | **8(E)** |
|---|---|---|---|---|---|---|---|---|---|
| Naturkautschuk | phr | 50 | 50 | 50 | 50 | 50 | 50 | 50 | 50 |
| BR^{a} | phr | 20 | 20 | 20 | 20 | 20 | 20 | 20 | 20 |
| E-SBR^{b} | phr | 30 | 30 | 30 | 30 | 30 | 30 | 30 | 30 |
| Ruß N339 | phr | 30 | 30 | 30 | 30 | 30 | 30 | 30 | 30 |
| Weichmacheröl | phr | 16 | 16 | 16 | 16 | 16 | 16 | 16 | 16 |
| Alterungsschutzmittel | phr | 3 | 3 | 3 | 3 | 3 | 3 | 3 | 3 |
| Stearinsäure | phr | 2 | 2 | 2 | 2 | 2 | 2 | 2 | 2 |
| Zinkoxid | phr | 2,5 | 2,5 | 2,5 | 2,5 | 2,5 | 2,5 | 2,5 | 2,5 |
| Klebharz A^{c} | phr | - | 2 | - | - | - | 2 | - | - |
| Klebharz B^{d} | phr | - | - | 2 | - | - | - | 2 | - |
| Klebharz C^{e} | phr | - | - | - | 2 | - | - | - | 2 |
| Diphenyldisulfid | phr | - | - | - | - | 0,25 | 0,25 | 0,25 | 0,25 |
| Beschleuniger | phr | 1,1 | 1,1 | 1,1 | 1,1 | 1,1 | 1,1 | 1,1 | 1,1 |
| Schwefel | phr | 2,2 | 2,2 | 2,2 | 2,2 | 2,2 | 2,2 | 2,2 | 2,2 |

| **Eigenschaften** | | | | | | | | | |
|---|---|---|---|---|---|---|---|---|---|
| Reißdehnung bei RT | % | 500 | 513 | 520 | 528 | 495 | 508 | 533 | 547 |
| Zugfestigkeit bei RT | N/mm² | 12,8 | 12,8 | 12,0 | 12,2 | 12,8 | 12,7 | 13,1 | 13,0 |
| Konfektionsklebrigkeit | - | 2 | 3 | 4 | 5 | 2 | 3 | 4 | 5 |
| Rollweg Stahlkugel | cm | 23 | 18 | 15 | 11 | 23 | 18 | 19 | 14 |

| | | | | | | | | | |
|---|---|---|---|---|---|---|---|---|---|
| ^{a}High-cis Polybutadien ^{b}emulsionspolymerisiertes Styrol-Butadien-Copolymer, Styrolgehalt: 23,5 Gew.-%, Vinylanteil ca. 13 %, ESBR 1500, DOW Chemicals, USA ^{c}Klebharz A: aromatisches Kohlenwasserstoffharz, Norsolene S95, Totalfina, USA ^{d}Klebharz B: Phenol-Formaldehyd-Harz, Durez 29095, Durez Corporation, USA ^{e}Klebharz C: Phenolharz, Kondensationsprodukt aus Butylphenol und Acetylen, Koresin^{®}, BASF, Deutschland | | | | | | | | | |

Aus der Tabelle 1 wird ersichtlich, dass die Zudosierung von Phenol-Formaldehyd-Harzen mit Diphenyldisulfid eine besonders hohe Konfektionsklebrigkeit bei akzeptabler Walzenklebrigkeit bewirkt. Gleichzeitig ergeben sich für die Mischungen 7(E) und 8(E) hohe Reißdehnungen und hohe Zugefestigkeiten. Diese hohen Reißdehnungen und Zugefestigkeiten waren weder mit den Harzen und Diphenyldisulfid allein (Mischungen 3(V), 4(V), 5(V)) noch mit einem aromatischen Kohlenwasserstoffharz wie Norsolene S95 (Mischung 6(V)) zu erzielen und gehen über den additiven Effekt der Einzelmaßnahmen hinaus.

## Patentansprüche

1. Schwefelvernetzbare Kautschukmischung, enthaltend
- zumindest einen Dienkautschuk,
- 0,5 - 10 phr zumindest eines Klebharzes, ausgewählt aus der Gruppe bestehend aus Phenolharz, Phenol-Formaldehyd-Harz, Cumaron-Inden-Harz und Kolophoniumharz, und
- 0,05 - 2 phr zumindest eines Aryl- und/oder Phenyldisulfids.

2. Kautschukmischung nach Anspruch 1, **dadurch gekennzeichnet, dass** die Kautschukmischung 1 bis 5 phr des Klebharzes enthält.

3. Kautschukmischung nach Anspruch 1 oder 2, **dadurch gekennzeichnet, dass** das Klebharz ein Phenolharz und/oder ein Phenol-Formaldehyd-Harz ist.

4. Kautschukmischung nach zumindest einem der vorhergehenden Ansprüche, **dadurch gekennzeichnet, dass** die Kautschukmischung 0,1 bis 1 phr des Aryl- und/oder Phenyldisulfids enthält.

5. Kautschukmischung nach zumindest einem der vorhergehenden Ansprüche, **dadurch gekennzeichnet, dass** das Aryl- und/oder Phenyldisulfid Diphenyldisulfid ist.

6. Kautschukmischung nach zumindest einem der vorhergehenden Ansprüche, **dadurch gekennzeichnet, dass** sie zumindest zwei Dienkautschuke enthält.

7. Kautschukmischung nach Anspruch 6, **dadurch gekennzeichnet, dass** sie Naturkautschuk, Polybutadien und Styrol-Butadien-Copolymer im Verschnitt enthält.

8. Reifen, der zumindest zum Teil aus einer mit Schwefel vulkanisierten Kautschukmischung nach zumindest einem der Ansprüche 1 bis 7 besteht.

## Claims

1. Sulphur-crosslinkable rubber mixture comprising
- at least one diene rubber,
- from 0.5 to 10 phr of at least one adhesive resin selected from the group consisting of phenolic resin, phenol-formaldehyde resin, coumarone-indene resin and colophony resin, and
- from 0.05 to 2 phr of at least one aryl and/or phenyl disulphide.

2. Rubber mixture according to Claim 1, **characterized in that** the rubber mixture comprises from 1 to 5 phr of the adhesive resin.

3. Rubber mixture according to Claim 1 or 2, **characterized in that** the adhesive resin is a phenolic resin and/or a phenol-formaldehyde resin.

4. Rubber mixture according to at least one of the preceding claims, **characterized in that** the rubber mixture comprises from 0.1 to 1 phr of the aryl and/or phenyl disulphide.

5. Rubber mixture according to at least one of the preceding claims, **characterized in that** the aryl and/or phenyl disulphide is diphenyl disulphide.

6. Rubber mixture according to at least one of the preceding claims, **characterized in that** it comprises at least two diene rubbers.

7. Rubber mixture according to Claim 6, **characterized in that** it comprises natural rubber, polybutadiene and styrene-butadiene copolymer in a blend.

8. Tyre which is at least to some extent composed of a sulphur-vulcanized rubber mixture according to at least one of Claims 1 to 7.

## Revendications

1. Mélange de caoutchouc réticulable par du soufre, contenant
- au moins un caoutchouc diène,
- 0,5 à 10 phr d'au moins une résine adhésive, choisie dans le groupe constitué par une résine de phénol, une résine de phénol-formaldéhyde, une résine de coumarone-indène et une résine de colophane, et
- 0,05 à 2 phr d'au moins un disulfure d'aryle et/ou de phényle.

2. Mélange de caoutchouc selon la revendication 1, **caractérisé en ce que** le mélange de caoutchouc contient 1 à 5 phr de la résine adhésive.

3. Mélange de caoutchouc selon la revendication 1 ou 2, **caractérisé en ce que** la résine adhésive est une résine de phénol et/ou une résine de phénol-formaldéhyde.

4. Mélange de caoutchouc selon au moins l'une quelconque des revendications précédentes, **caractérisé en ce que** le mélange de caoutchouc contient 0,1 à 1 phr du disulfure d'aryle et/ou de phényle.

5. Mélange de caoutchouc selon au moins l'une quelconque des revendications précédentes, **caractérisé en ce que** le disulfure d'aryle et/ou de phényle est un disulfure de diphényle.

6. Mélange de caoutchouc selon au moins l'une quelconque des revendications précédentes, **caractérisé en ce qu'**il contient au moins deux caoutchoucs diène.

7. Mélange de caoutchouc selon la revendication 6, **caractérisé en ce qu'**il contient du caoutchouc naturel, du polybutadiène et un copolymère de styrène-butadiène en mélange.

8. Pneu, qui est constitué au moins en partie par un mélange de caoutchouc vulcanisé par du soufre selon au moins l'une quelconque des revendications 1 à 7.
